# EUROPEAN PATENT APPLICATION

(11) **EP 1 956 355 A1**
(43) Date of publication of application: **13.08.2008**
(21) Application number: 05806865.1
(22) Date of filing: 15.11.2005
(51) Int. Cl.: G01L 1/14, G01P 15/125

(54) **STRAIN-INDUCING BODY, CAPACITANCE-TYPE FORCE SENSOR, AND CAPACITANCE-TYPE ACCELERATION SENSOR**

(71) Applicant: Appside Co., Ltd., Tokyo 116-0013 (JP)
(72) Inventor: TANIGUCHI, Nobumitsu, Tokyo 1160013 (JP); MIZUSHIMA, Masanori, Tokyo 1160013 (JP)
(74) Representative: TBK-Patent
(86) International application number: PCT/JP2005/020966
(87) International publication number: WO 2007/057943

(57) **Abstract**

The invention provides an elastic body that reduces the cost of manufacture, has high deformation stability and excellent restoration capability, and is easy to be formed, a force sensor and an acceleration sensor equipped with said elastic body.

The elastic body includes a first elastic part with electroconductivity and a second elastic part made of a tabular member which is harder than the first elastic part and is insertion-formed into the first elastic part.

## Description

### TECHNICAL FIELD

The present invention relates to an elastic body that causes a deformation and a strain when an external force is applied, an electrostatic capacitance force sensor that detects a change of force based on a change of electrostatic capacitance using the elastic body, and an electrostatic capacitance acceleration sensor that detects a change of acceleration based on a change of electrostatic capacitance using the elastic body.

### BACKGROUND ART

The force sensor that detects a change of force based on a change of electrostatic capacitance is used, for example, for a bathroom scale. This type of force sensor is used as a human interface consisting of a button or stick type input unit, which is well-known as a stick type input device of a laptop personal computer.

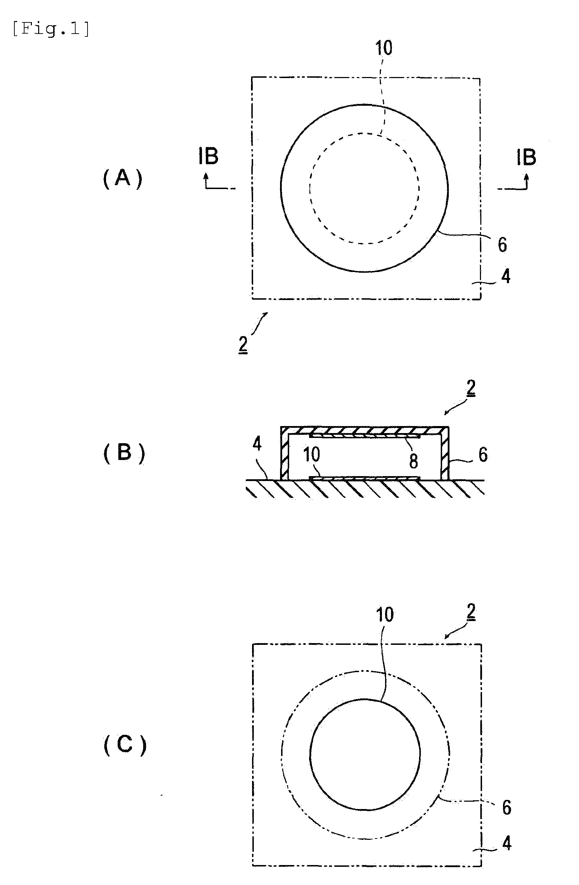

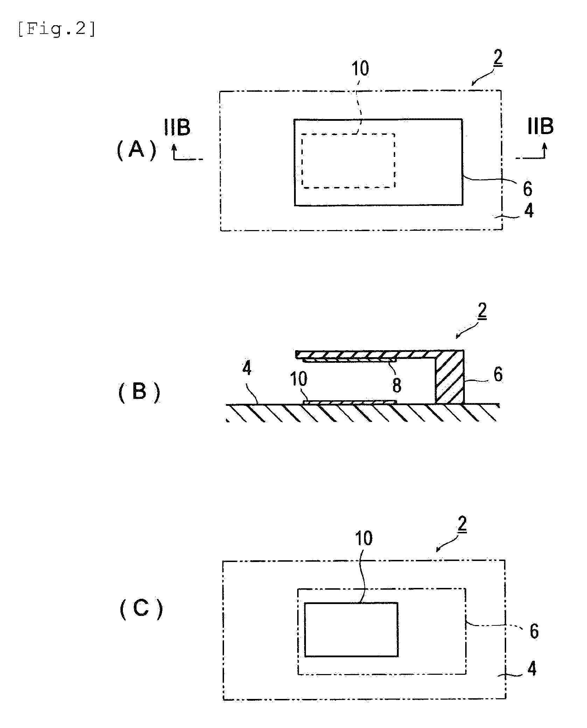

Fig. 1 and Fig. 2 show the outlines of conventional force sensors, wherein Fig. 1 (A) is a plan view of a conventional force sensor, Fig. 1 (B) is its cross-sectional view along a line IB-IB, Fig. 1 (C) is a plan view of a detection electrode, Fig. 2 (A) is a plan view of another conventional force sensor, Fig. 2 (B) is its cross-sectional view along a line IIB-IIB, and Fig. 2 (C) is a plan view of a detection electrode.

This force sensor 2 is equipped with an elastic body 6 consisting of an insulator made of, e.g., silicone rubber and a conductor mounted on a base board 4, an electrode 8 attached to the ceiling surface of the elastic body 6, and a detection electrode 10 placed on the base board 4 to face the electrode 8. The device shown in Fig. 1 has the elastic body 6 constructed as a gantry beam and the detection electrode 10 formed in a circular shape, while the device shown in Fig. 2 has the elastic body 6 constructed as a cantilever beam and the detection electrode 10 formed in a rectangular shape. If the elastic member 6 is made of a conductive material, there is no need to provide the electrode 8 separately.

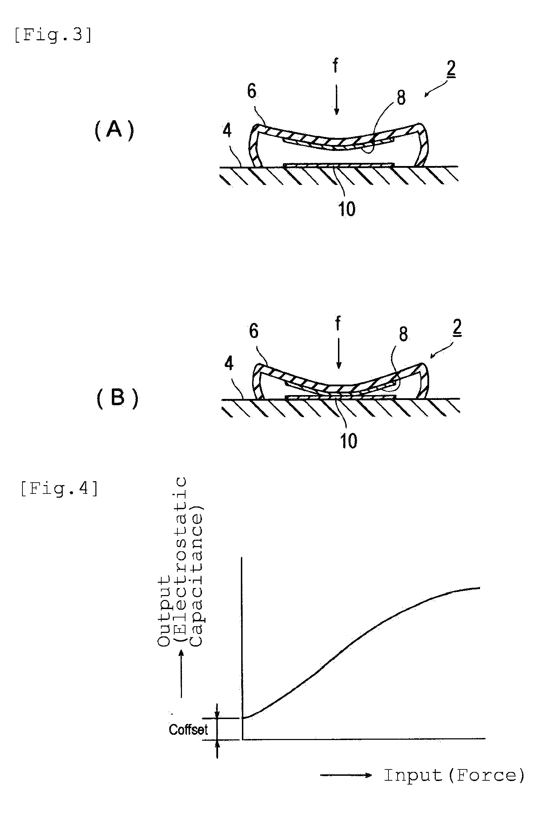

In describing a force sensor taking the force sensor 2 shown in Fig. 1 as an example, a force "f" applied on the elastic body 6 causes the elastic body 6 to deform elastically as shown in Fig. 3 (A), thus reducing the distance "d" between the electrodes, eventually causing the electrode 8 and the detection electrode 10 to contact with each other as shown in Fig. 3 (B), increasing the electrostatic capacitance between the electrodes. The relation between the input (force f) applied on the elastic body 6 and the output (electrostatic capacitance C) increases or decreases along a smooth curve as shown in Fig. 4. Coffset shown here is the electrostatic capacitance between the electrodes in the state shown in Fig. 1 (B), i.e., the offset output when the distance between the electrodes "d" is unchanged, indicating the zero point output, i.e., the capacitance that does not change any more even if more force f is applied, unless the force f exceeds the elasticity of the structure 6. This offset output depends on the elasticity, restoration, buckling, and other characteristics of the elastic body 6. A similar input/output relation exists for the force sensor 2 shown in Fig. 2.

The force sensor that detects the applied force f as the change of electrostatic capacitance is well-known (Refer to JPA H6-314163).

This document discloses an electrostatic sensor in which the displacement of the input unit is set up especially large and its constitution is such that a pair of base boards that are displaceable in parallel are provided parallel to each other and each of their opposing faces is equipped with an electrode displaced at 90° with each other.

Although the above scheme is described as a force sensor, the same principle can be applied to an acceleration sensor as well, so that a change in the acceleration is detectable based on a change of electrostatic capacitance in the acceleration sensor.

Incidentally, in such a force or acceleration sensor, the reliability between the input and output relation is important, and especially the stability of the zero point output (offset output) is extremely important. In other words, it is necessary that the output is zero, or it shows a specific offset value, which is stable, when the device is not operated. In other words, the device becomes unreliable as a detection device as the zero point cannot be specified, if the output varies or the offset value varies when it is not operated.

For example, if the zero point or the offset value varies in a pointing device using a force sensor, the pointer may start to move due to a minute output (residual output) although it is not operated.

The residual output of the force sensor (Fig. 1 or Fig. 2) will be explained below with reference to Fig. 5. In Fig. 5 (A), let us assume that five input forces f1, f2, f3, f4, and f5 are applied within a relatively short time, where their relative sizes are such that f2>f1>f3≈f4≈f5, f2 having the highest level, f1 and f2 having long time spans, whereas f3, f4 and f5 being minute inputs of minute duration time periods. It is assumed that minute inputs are applied after huge inputs.

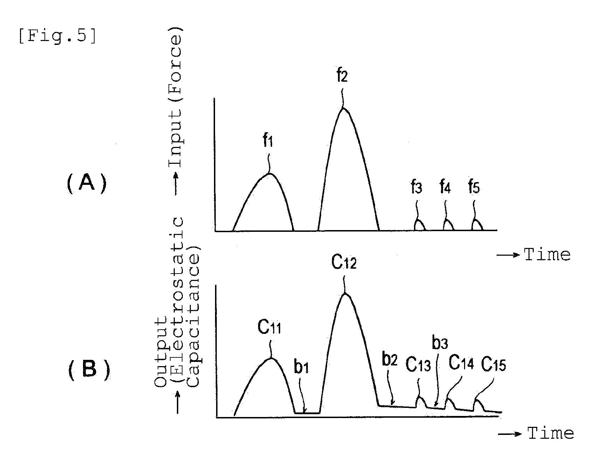

For such inputs f1 through f5, the force sensor 2 provides outputs C11, C12, C13, C14, and C15 respectively as shown in Fig. 5 (B), i.e., electrostatic capacitance variations corresponding to the inputs, showing a minute output at b1 portion although there is no input following the output C11 corresponding to the first input f1. This is the residual output. Also, a still larger residual output occurred in the b2 portion after the output C12 due to the input f2. It is understood that the outputs C13 through C15 are overlapping on this residual output, while the residual outputs for the b3 portion and thereafter reduce with time as the inputs are smaller.

### DISCLOSURE OF THE INVENTION

### PROBLEM TO BE SOLVED BY THE INVENTION

While this kind of residual output depends on the restoration characteristic of the elastic body 6 which is subjected to pressure, elastomers such as rubber that are normally used for the elastic body 6 have characteristics that do not allow them to restore their original shapes completely. On the other hand, while the elastic body 6 can be formed from a metallic plate, it increases the cost.

In order to avoid these problems of the prior art, a method of forming the elastic body by gluing a plastic plate on silicone rubber has been proposed, but it requires complex works such as cleaning the gluing surface and coating it with supplemental adhesive liquid in addition to the adhesive liquid in order to glue the plastic plate securely.

The abovementioned prior art does not disclose anything on such problems nor provides any disclosure or suggestion of means to solve those problems.

Therefore, an objective of the present invention is to provide an inexpensive elastic body that has a high deformation stability, a high restoration capability, and can be easily formed.

Another objective of the present invention is also to provide an electrostatic capacitance force or acceleration sensor with a high detection accuracy by means of using an elastic body of an excellent restoration capability in regard to an electrostatic capacitance force sensor that detects force based on the change of electrostatic capacitance or an electrostatic capacitance acceleration sensor that detects acceleration based on the change of electrostatic capacitance.

### MEANS FOR SOLVING PROBLEM

In order to achieve the above objectives, the elastic body of the present invention comprises a first elastic part having electroconductivity and a second elastic part made of a tabular member that is harder than said first elastic part and insertion-molded into said first elastic part.

With such a constitution, the cost can be reduced compared with the case where the entire elastic body is made of a metallic plate or of a part machined aluminum piece, etc. It has higher deformation stability and a better restoration characteristic compared to a case where the entire elastic body is made of silicone rubber, etc. Moreover, it is easier to form compared to the elastic body of prior art which is made by gluing a metallic plate on a silicone rubber member, as it does not require complex works of cleaning the gluing surface and coating it with a supplemental adhesive liquid in addition to the adhesive liquid.

In order to achieve the abovementioned objectives, the electrostatic capacitance force sensor and the electrostatic capacitance acceleration sensor of the present invention are equipped with the abovementioned elastic body. A sensor with such a constitution can convert the external force applying to the elastic body with high accuracy to a change of electrostatic capacitance to achieve a high detection accuracy of the sensor as it is equipped with an elastic body having high deformation stability and an excellent restoration characteristic. Also, as it is equipped with an elastic body that can be easily formed allowing low cost production, it can provide a sensor of high detection accuracy at a low cost.

In order to achieve such objectives, it is also possible to form an electrostatic capacitance force or acceleration sensor by further providing a detection electrode to face said elastic body and covering the surface of said detection electrode facing said elastic body with an insulation film of a uniform thickness. With such a constitution, it is possible to maintain the thickness of the insulation layer uniform in order to minimize the fluctuation of the electrostatic capacitance between one sensor to another (fluctuation of the detection sensitivity).

In order to achieve said objectives, an electrostatic capacitance sensor can also be constituted to have a base board on which said detection electrode is formed, and a case for affixing said elastic body to a position to face said detection electrode, where said case being affixed to said base board by welding while containing said elastic body inside. With such a constitution, it is possible to rigidly affix the case with the base board to maintain the distance between the elastic body and the detection electrode (distance between the electrodes) constant securely.

In order to achieve said objectives, an electrostatic capacitance sensor can also be constituted to have a base board on which said detection electrode is formed, and a case for affixing said elastic body to a position to face said detection electrode, where said case being insertion-molded to said elastic body inside. With such a constitution, the elastic body can be mounted on the base board more easily making it possible to minimize the size of the device.

### EFFECT OF THE INVENTION

The elastic body according to the present invention can be produced at a low cost, has high deformation stability and an excellent restoration characteristic, and can be formed easily.

The electrostatic capacitance force and acceleration sensors according to the present invention have excellent effects of providing high detection accuracies and can be produced at low costs.

### BRIEF DESCRIPTION OF DRAWINGS

The above and other objects, features and advantages of the present invention will become apparent from the following description and appended claims, taken in conjunction with the accompanying drawings.

In Fig. 1, (A) is a plan view of a typical force sensor of prior art, (B) is a cross section along IB-IB line of the same force sensor, and (C) is a plan view of the detection electrode of the same force sensor.

In Fig. 2, (A) is a plan view of a typical force sensor of prior art, (B) is a cross section along IIB-IIB line of the same force sensor, and (C) is a plan view of the detection electrode of the same force sensor.

Fig. 3 is a diagram showing the deformation status of the force sensor relative to the input force, wherein (A) is a diagram showing the initial state of deformation, and (B) is a diagram showing the electrode and the detection electrode are in contact with each other due to deformation.

Fig. 4 is a diagram showing the input/output relation of the force sensor.

Fig. 5 is a diagram showing the input/output relation of the same force sensor, wherein (A) is a diagram showing a case when the inputs are applied five times within a relatively short period of time, and (B) is a diagram showing the residual outputs.

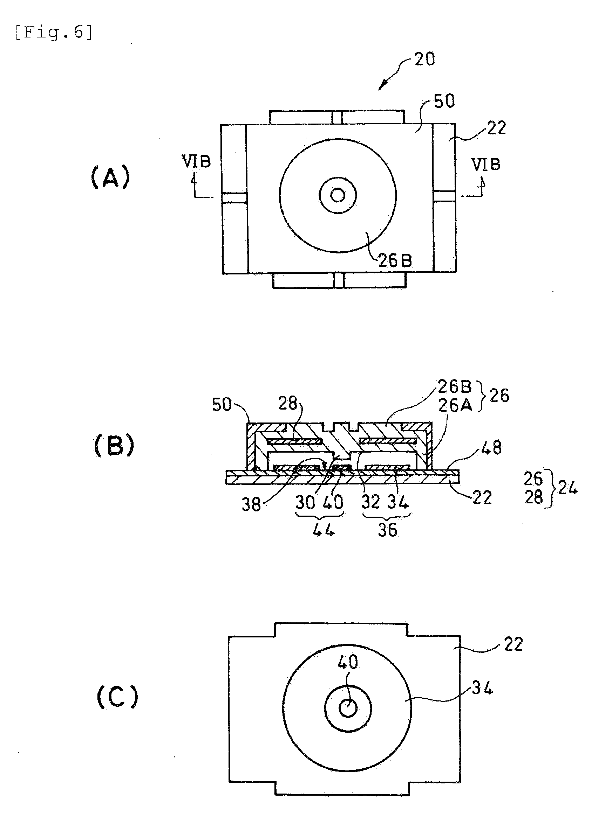

In Fig. 6, (A) is a plan view of a force sensor according to the first embodiment of the present invention, (B) is a cross section along VIB-VIB line of the same force sensor, and (C) is a plan view of the detection electrode of the same force sensor.

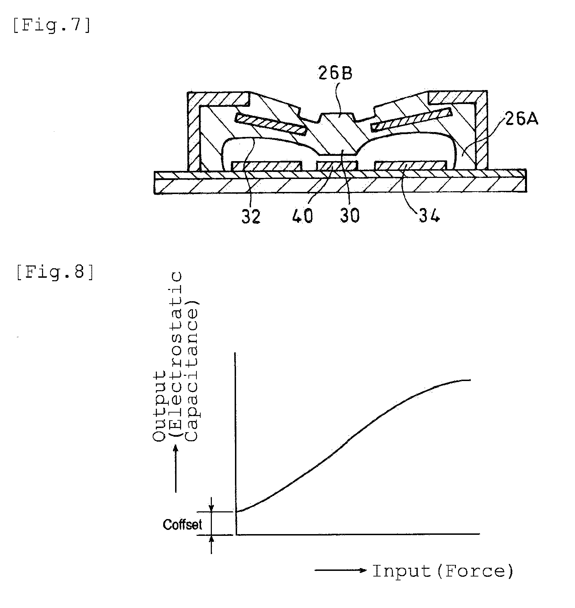

Fig. 7 is a diagram showing the deformation of the force sensor.

Fig. 8 is a diagram showing the input/output relation of the force sensor.

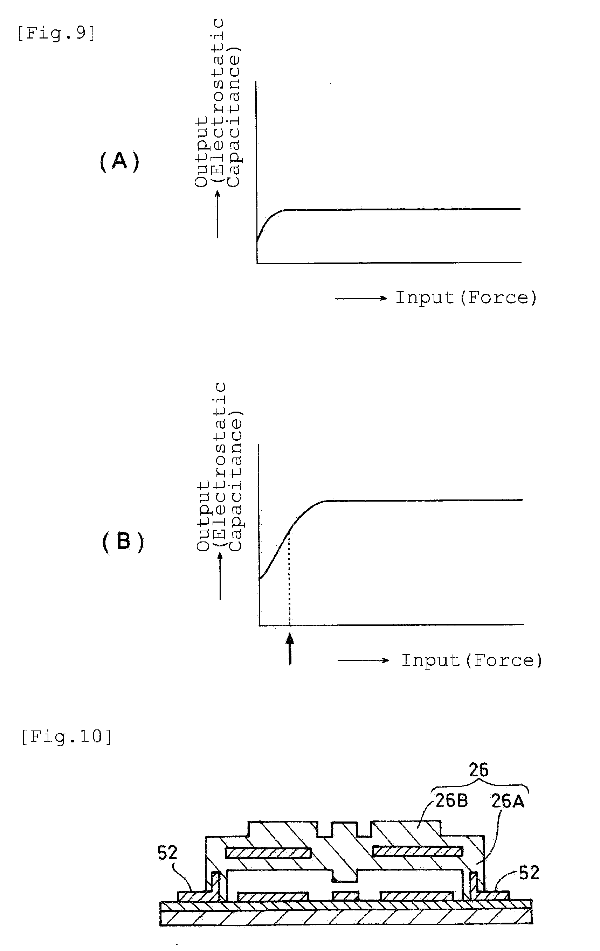

In Fig. 9, (A) shows the input/output relation of the second sensor part of the same force sensor, and (B) is an enlarged view of a portion of the input/output relation diagram shown in (A).

Fig. 10 is a cross section of the force sensor according to the first embodiment of the present invention where a different case is applied.

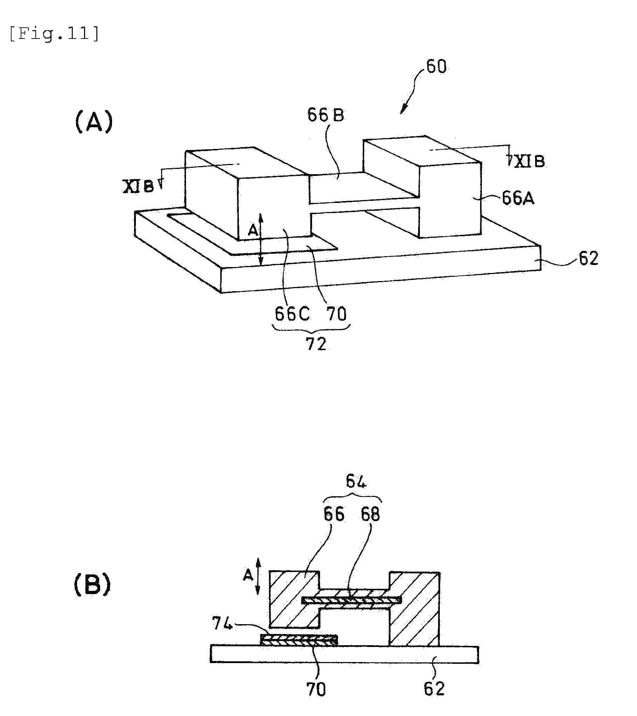

In Fig. 11, (A) is an outside perspective view of an acceleration sensor according to the second embodiment of the present invention, and (B) is a cross section along XIB-XIB line of the same acceleration sensor.

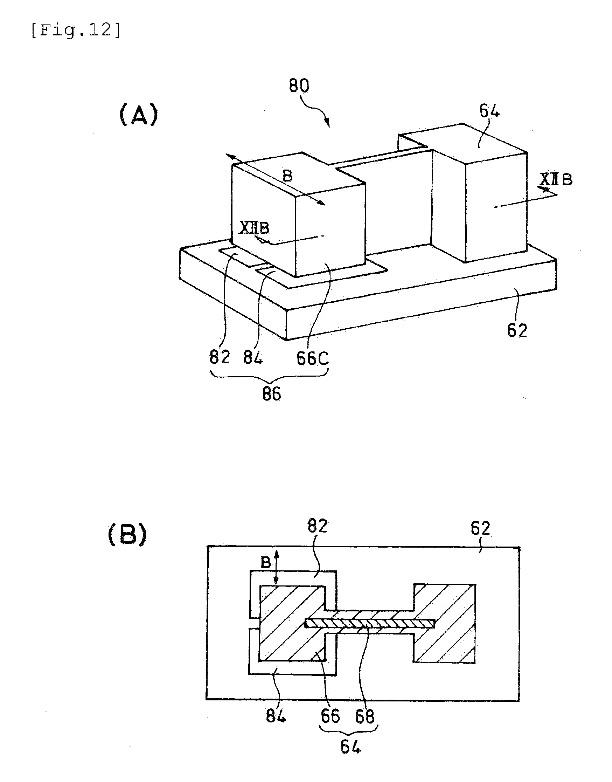

In Fig. 12, (A) is an outside perspective view of an acceleration sensor according to the third embodiment of the present invention, and (B) is a cross section along XIIB-XIIB line of the same acceleration sensor.

### MODE(S) FOR CARRYING OUT THE INVENTION

Embodiments of the present invention will be described below:

### FIRST EMBODIMENT

The first embodiment of the present invention will be described below with reference to Fig. 6. Fig. 6 shows an electrostatic capacitance force sensor (hereinafter called simply "force sensor"), wherein (A) is its plan view, (B) is a cross section along line VIB-VIB of (A), and (C) is a plan view of the detection electrode.

This force sensor 20 has an elastic body 24 mounted on the upper surface of a base board 22 to deform and cause strain when an external force is applied.

The elastic body 24 includes a first elastic part 26 with electroconductivity and a second elastic part 28 made of a tabular member which is harder than the first elastic part 26 and insertion-molded into said first elastic part 26.

The first elastic part 26 of the present embodiment consists of a cylindrically shaped support part 26A which is flexible in the vertical direction in Fig. 6 (B), and a tabular input part 26B formed integral with the support member 26A, wherein a columnar shaped elastic body protrusion 30 is provided in the center of the inside of the input member 26B and an annular shaped elastic body concavity 32 is formed surrounding the elastic body protrusion 30.

The first elastic part 26 in this embodiment is made of electroconductive silicone rubber. The material for "the first elastic part" according to the present invention is not limited to electroconductive silicone rubber used in the present embodiment but rather any material that has electroconductivity and is capable of deforming to cause strain can be used. Therefore, resins and rubber that has electroconductivity such as electroconductive elastomer can be used for the first elastic part 26, and it is also possible to form the first elastic part 26 by coating a material of non-electroconductive silicone rubber or elastomer with an electroconductive material either by printing or sputtering.

On the other hand, the second elastic part 28 of the present embodiment consists of an annular shaped metal plate. The material of the second elastic part according to the present invention shall not be limited to the metal part used in the present embodiment but can be any material that is harder than the first elastic part 26. Therefore, a plastic plate, for example, can be used for the second elastic part 28. Moreover, the shape of the second elastic part according to the present invention does not have to be limited to an annular shape of the present embodiment, but rather any tabular member can be used as well. Therefore, the shape of the second elastic part 28 can be, for example, a circular disk or a polygonal shape as well or can even be bent (ribbed) tabular member, not just a flat plate.

The second elastic part 28 is insertion-molded along the annular elastic body concavity 32 located approximately in the middle of the thickness direction of the flat tabular input part 26B as shown in Fig. 6 (B) . The insertion-molding method for the second elastic part 28 is not limited specifically, but rather examples (1) through (3) described below can be used as well.
(1) Fit the center opening of the annular second elastic part 28 into a protrusion provided at either the top or bottom die, and support the outside of the circumference of the second elastic part 28 by the other one of the top or bottom die, so that the second elastic part 28 can be positioned in the center of the cavity of the dies. Next, inject, for example, electroconductive silicone as the material of the first elastic part 26 into the cavity of the dies (the entire circumference of the second elastic part 28) to be hardened, thus to insertion-form the second elastic part 28 in the first elastic part 26.
(2) Prepare the second elastic part 28 as a circular disk having a plurality of positioning holes equally spaced in between in the circumferential direction. Fit those positioning holes of the second elastic part 28 to a plurality of affixing pins provided on the opposing surfaces of the top and bottom dies, so that the second elastic part 28 can be positioned in the center of the cavity of the die. Next, inject, for example, electroconductive silicone as the material of the first elastic part 26 into the cavity of the dies to be hardened same as in (1), thus to insertion-form the second elastic part 28 in the first elastic part 26. This makes it possible to position the second elastic part 28 accurately.
(3) After forming one side of the second elastic part 28 to be covered by the first elastic part 26, reverse them to form the first elastic part 26 on the other surface of the second elastic part 28, thus to complete the insertion-molding of the second elastic part 28 in the first elastic part 26.

As described above, the elastic body 24 according to the present embodiment includes the electroconductive first elastic part 26 and the second elastic part 28 made of a tabular member which is harder than the first elastic part 26 and insertion-molded into the first elastic part 26, the production cost can be reduced compared to a case of forming the entire elastic body from a metal plate or by machining an aluminum material. It has higher deformation stability and a better restoration characteristic compared to a case where the entire elastic body is made of silicone rubber. Moreover, it is easier to form compared to the elastic body of prior art which is made by gluing a metallic plate on a silicone rubber member, as it does not require complex works of cleaning the gluing surface and coating it with a supplemental adhesive in addition to the adhesive.

A force sensor 20 according to the present embodiment can convert the external force applying to the elastic member 24 with high accuracy to a change of electrostatic capacitance to achieve a high detection accuracy of the force sensor 20 as it is equipped with the elastic body 24 having high deformation stability and an excellent restoration characteristic. Also, as it is equipped with the elastic body 24 that can be easily formed allowing low cost production, it can provide the force sensor 20 of high detection accuracy at a low cost.

The base board 22 of the force sensor 20 is provided with an annular detection electrode 34 as a detection electrode, and the detection electrode 34 and the opposing elastic body concavity 32 constitutes a first sensor part 36 (hereinafter may be called simply "sensor part 36"). The sensor part 36 is so constituted that it outputs electrostatic capacitance C1 that corresponds to a force f as a distance d1 between the electrodes changes under the force f assuming the opposing area S1 between the elastic body concavity 32 and the detection electrode 34 is constant. Although the elastic body concavity 32 and the detection electrode 34 are described as annular shaped objects in the present embodiment, they can be formed as rectangular objects.

Also, a circular detection electrode 40 is provided as a second detection electrode separated by an insulation distance 38 inside of the detection electrode 34. This detection electrode 40 and the opposing elastic body protrusion 30 constitute a second sensor part 44 (hereinafter may be simply called "sensor part 44"). The sensor part 44 is so constituted that it outputs electrostatic capacitance C2 that corresponds to a force f as a distance d2 between the electrodes changes under the force f assuming the opposing area S2 between the elastic body protrusion 30 and the detection electrode 40 is constant. The electrode distance d2 of the sensor part 44 is smaller than the electrode distance d1 of the sensor part 36 by the height of the elastic body protrusion (d1 > d2). Although the elastic body protrusion 30 and the detection electrode 40 are described as circular shaped objects in the present embodiment, they can be formed as rectangular objects.

With such a constitution, applying the force f by pressing the input part 26B of the elastic body 24 of the force sensor 20 with a finger, for example, the elastic body 24 deforms in correspondence with the force f, causing the input part 26B as well as the support part 26A to bend as shown in Fig. 7, causing the elastic body concavity 32 and the detection electrode 34 to come closer to each other, and the elastic body protrusion 30 and the detection electrode 40 to come closer and contact with each other. In this case, since the distance between the elastic body protrusion 30 and the detection electrode 40 is small, the elastic body protrusion 30 and the detection electrode 40 come into contact immediately after the input part 26B starts to displace. As a result of such a displacement, the sensor part 36 detects the electrostatic capacitance C1 in correspondence with the opposing area S1 and the electrode distance d1 as the first sensor output, and the sensor part 44 detects the electrostatic capacitance C2 in correspondence with the opposing area S2 and the electrode distance d2 as the second sensor output.

The input/output relation of the sensor part 36 appears here as a smooth change of the electrostatic capacitance C1 relative to the input f as shown in Fig. 8. The offset output Coffset is the output of the sensor part 36 before the input part 26B deforms.

On the contrary, the input/output relation of the sensor part 44 produces output changes within a small input range and saturates immediately after the start of the displacement of the input part 26B as the elastic body protrusion 30 makes contact with the detection electrode 40 as shown in Fig. 9 (A). Fig. 9 (B) is an enlarged view of the input/output relation shown in Fig. 9 (A), and the sensor part 44 develops a saturation with a smaller input than that in the sensor 36, so that the sensor part 44 can be used to detect only the small portion of the force f. In other words, the output of the sensor 44 can grasp the output in the vicinity of the zero point of the force sensor 20.

An insulation film 48 with a uniform thickness is glued to cover the entire surface of the elastic body 24 side of the base board 22 as shown in Fig. 6 (B). In the figure, the thickness of the insulation film 48 is shown exaggerated for the sake of the convenience of the description.

With such a constitution, it is possible to maintain the thickness of the insulation layer uniform in order to minimize the fluctuation of the electrostatic capacitance between one sensor to another (fluctuation of the detection sensitivity) .

The detection electrode is normally applied with an insulation coating as the exposed detection can cause short-circuiting if it is exposed. Therefore, there is air and a layer (insulation layer) consisting of an insulation material between the detection electrode and the opposing electrode which causes a problem that the amount of static electricity accumulated between the electrodes vary from one sensor to another due to the difference in permittivity of air and the insulation layer as well as the fluctuation in the thickness of the insulation layer. The inventor of the present invention found a way to solve such a problem by standardizing the thickness of the insulation layer using an insulation film of a uniform thickness.

Although the insulation film 48 is glued onto the entire surface of the base board 22 in the present embodiment, the present invention is not limited to it and it is satisfactory so long as the insulation film 48 is applied at least on the surface of the elastic body side of the detection electrode. Therefore, the insulation film 48 can be glued on only the surface of the elastic body 24 side of the detection electrodes 34 and 40. Moreover, if the insulation film 48 is affixed by means of double-faced adhesive tape on the circumference of the detection electrodes 34 and 40 avoiding their surfaces, so the insulation film 48 can cover the top surfaces of the detection electrodes 34 and 40, thus minimizing the fluctuation of the electrostatic capacitance. Various methods of gluing the insulation film 48 have been considered, for example, the insulation film 48 can be attached with a double-faced adhesive tape of a uniform thickness in advance, or the surface of the base board 22 can be attached with a double-faced adhesive tape of a uniform thickness in advance with which the insulation film 48 can be affixed later.

The force sensor 20 is equipped with a case 50 for affixing the elastic body 24 in a position facing the detection electrodes 34 and 40, wherein the case 50 is affixed to the base board 22 by welding while encasing the elastic body 24 inside.

With such a constitution, it is possible to rigidly affix the case 50 with the base board 22 to maintain the distance between the elastic body 24 and the detection electrodes 34 and 40 (distance between the electrodes) constant securely. Although gluing using an adhesive is considered as an alternative, its strength is lower compared to welding, and the strength can even reduce when it is affected by the heat of soldering on the base board 22. Also, while the case 50 can be soldered to the base board 22 as an alternative, the base board 22 can deform or the wiring pattern may peel off due to the heat during the soldering work. Furthermore, although the case 50 can be affixed mechanically to the base board 22 by means of caulking, the additional stress to the base board 22 may increase the detection error of the sensor due to the stress.

On the other hand, if the case 50 and the base board 22 are jointed by welding, a portion of the case 50 and the pattern of the base board 22 are fused together thus binding the two firmly. The welding process here can be implemented with a known method such as laser welding, resistance welding and arc welding.

The "case" in the present invention is not limited to the shape of the case 50 of the present embodiment, but can be insertion-formed in the supporting part 26A of the elastic body 24 in advance as a case 52 shown in Fig. 10. With such a constitution, the elastic body 24 can be mounted on the base board 22 more easily making it possible to minimize the size of the device.

### SECOND EMBODIMENT

The second embodiment of the present invention will be described below with reference to Fig. 11. Fig. 11 shows an electrostatic capacitance acceleration sensor (hereinafter called simply "acceleration sensor"), wherein (A) is its outside perspective view, and (B) is a cross section along line XIB-XIB of (A).

This force sensor 60 has an elastic body 64 mounted on the upper surface of a base board 62 to deform and cause strain when an external force is applied.

The elastic body 64 includes a first elastic part 66 with electroconductivity and a second elastic part 68 made of a tabular member which harder than the first elastic part 66 and is insertion-formed into said first elastic part 66.

The first elastic part 66 of the present embodiment consists of a rectangular solid-shaped base 66A erected on the base board 62, a tabular support 66B that extends substantially in a horizontal direction anchored in the vicinity of the middle of said base 66A, and a rectangular solid-shaped weight part 66C that is supported by a cantilever consisting of the base 66A and the support 66B. Although the first elastic part 66 is made of electroconductive silicone rubber in the present embodiment, the "first elastic part" according to the present invention dose not have to be limited to electroconductive silicone rubber as described in the above.

On the other hand, the second elastic part 68 in the present embodiment is made of a metal plate and is insertion-molded covering the areas of the base 66A, the support 66B and the weight part 66C anchoring at substantially in the middle of the thickness direction of the support 66B of the first elastic part 66. As described in the above, the "second elastic part" according to the present invention does not have to be limited to a metal plate.

As described above, the elastic body 64 according to the present embodiment consists of the electroconductive first elastic part 66 and the second elastic part 68 made of a plate-shaped material which is harder than the first elastic part 66 and insertion-molded into the first elastic part 66, the production cost can be reduced compared to a case of forming the entire elastic body from a metal plate or by machining an aluminum material. It has higher deformation stability and a better restoration characteristic compared to a case where the entire elastic body is made of silicone rubber. Moreover, it is easier to form compared to the elastic body of prior art which is made by gluing a metallic plate on a silicone rubber member, as it does not require complex works of cleaning the gluing surface and coating with a supplemental adhesive in addition to the adhesive.

An acceleration sensor 60 according to the present embodiment can convert the external force applying to the elastic member 64 with high accuracy to a change of electrostatic capacitance to achieve a high detection accuracy of the acceleration sensor 60 as it is equipped with the elastic body 64 having high deformation stability and an excellent restoration characteristic. Also, as it is equipped with the elastic body 64 that can be easily formed allowing low cost production, it can provide the acceleration sensor 60 of high detection accuracy at a low cost.

The base board 62 of the acceleration sensor 60 is provided with a rectangular detection electrode as a detection electrode, and the detection electrode 70 and the opposing weight part 66C constitute a sensor part 72. This sensor part 72 is constituted to output electrostatic capacitance relative to acceleration as the distance between the weight part 66C and the detection electrode 70 varies as the acceleration of weight part 66C in the vertical direction (direction of arrow A) in Fig. 11 (B) varies, assuming the opposing area of the weight part 66C and the detection electrode 70 is constant. Although the shapes of the bottom surface of the weight part 66C and the detection electrode 70 are rectangular in the present embodiment, they can be circular-shaped.

An insulation film 74 (shown only in Fig. 11 (B)) of a uniform thickness is glued on the surface of the elastic body 64 in the detection electrode 70. In the figure, the thickness of the insulation film 74 is shown exaggerated for the sake of the convenience of the description.

With such a constitution, it is possible to maintain the thickness of the insulation layer uniform in order to minimize the fluctuation of the electrostatic capacitance between one sensor to another (fluctuation of the detection sensitivity) .

It is also possible to construct a weight sensor with the same constitution as the acceleration sensor 60 of the present embodiment, in which case the subject matter to be measured is placed on the weight part 66C so that the electrostatic capacitance relative to the weight of the subject matter to be measured can be outputted as the distance between the weight part 66C and the detection electrode 70 varies with the downward force of the weight part 66C in Fig. 11 (B).

### THIRD EMBODIMENT

The third embodiment of the present invention will be described below with reference to Fig. 12. Fig. 12 shows an acceleration sensor, wherein (A) is its outside perspective view, and (B) is a cross section along line XIIB-XIIB of (A).

This acceleration sensor 80 includes the elastic body 64 according to the second embodiment, except that it is turned around about its axis 90 degrees before it is mounted on the base board 62.

The base board 62 of the acceleration sensor 80 is provided with two rectangular detection electrodes 82/84 as detection electrodes, and the detection electrodes 82/84 and the opposing weight part 66C constitute a sensor part 86. The sensor part 86 is constituted to output electrostatic capacitance relative to acceleration as the opposing area between the weight part 66C and the detection electrodes 82/84 varies as the acceleration of weight part 66c in the vertical direction (direction of arrow B) in Fig. 12 (B) varies. Although the shapes of the bottom surface of the weight 66C and the detection electrodes 82/84 are rectangular in the present embodiment, they can be circular-shaped.

An acceleration sensor 80 according to the present embodiment can convert the external force applying to the elastic member 64 with high accuracy to a change of electrostatic capacitance to achieve a high detection accuracy of the acceleration sensor 80 as it is equipped with the elastic body 64 having high deformation stability and an excellent restoration characteristic. Also, as it is equipped with the elastic body 64 that can be easily formed allowing low cost production, it can provide the acceleration sensor 80 of high detection accuracy at a low cost.

While one dimensional acceleration change is detectable with the acceleration sensor 80 according to the present embodiment, two dimensional or even three dimensional acceleration change can be detected if it is combined with the abovementioned acceleration sensor 60. Such an acceleration sensor can be built into equipment such as a portable telephone to detect a drop through the change of acceleration to prevent damages to the hard disk head built into the portable telephone, or used as a sensor to compensate the position information on a GPS.

The elastic body related to the present invention is applicable to various sensors, especially to force sensors that detect changes of forces based on the change in electrostatic capacitance and acceleration sensors that detect changes of accelerations based on the change in electrostatic capacitance.

## Claims

1. An elastic body comprising:
a first elastic part having electroconductivity; and
a second elastic part made of a tabular member that is harder than said first elastic part and insertion-molded into said first elastic part.

2. An electrostatic capacitance force sensor equipped with the elastic body claimed in claim 1 that detects a change of force based on a change of electrostatic capacitance.

3. The electrostatic capacitance force sensor claimed in claim 2 further comprising:
a detection electrode provided to oppose said elastic body, wherein
an insulation film of a uniform thickness is provided on said detection electrode' s surface on said elastic body' s side.

4. The electrostatic capacitance force sensor claimed in claim 2 or 3, further comprising:
a base board on which said detection electrode is formed; and
a case for affixing said elastic body to a position opposing said detection electrode, wherein
said case is affixed by welding to said base board while said elastic body is encased inside.

5. The electrostatic capacitance force sensor claimed in claim 2 or 3 further comprising:
a base board on which said detection electrode is formed; and
a case for affixing said elastic body to a position opposing said detection electrode, wherein
said case is insertion-molded into said elastic body.

6. An electrostatic capacitance acceleration sensor equipped with the elastic body claimed in claim 1 that detects a change of acceleration based on a change of electrostatic capacitance.

7. The electrostatic capacitance acceleration sensor claimed in claim 6 further comprising:
a detection electrode provided to oppose said elastic body, wherein
an insulation film of a uniform thickness is provided on said detection electrode' s surface on said elastic body' s side.
